Europäisches Patentamt

European Patent Office

Office européen des brevets

(19)

(11) **EP 1 038 155 B1**

(12) **EUROPÄISCHE PATENTSCHRIFT**

(45) Veröffentlichungstag und Bekanntmachung des Hinweises auf die Patenterteilung:
**23.07.2003 Patentblatt 2003/30**

(51) Int Cl.⁷: $G01B\ 9/02$, G02F 1/03, H04B 10/155

(21) Anmeldenummer: **98958889.2**

(86) Internationale Anmeldenummer:
**PCT/EP98/06956**

(22) Anmeldetag: **03.11.1998**

(87) Internationale Veröffentlichungsnummer:
**WO 99/031460 (24.06.1999 Gazette 1999/25)**

(54) **WELLENLÄNGENMESSEINRICHTUNG MIT MITTELWERTFREI ANGESTEUERTEM MACH-ZEHNDER-INTERFEROMETER**

WAVELENGTH MEASURING DEVICE WITH A MACH ZEHNDER INTERFEROMETER CONTROLLED WITHOUT MEAN VALUE

DISPOSITIF DE MESURE DE LONGUEUR D'ONDE A INTERFEROMETRE DE MACH-ZEHNDER PILOTE SANS MOYENNE

(84) Benannte Vertragsstaaten:
**DE FR GB**

(30) Priorität: **12.12.1997 DE 19755402**

(43) Veröffentlichungstag der Anmeldung:
**27.09.2000 Patentblatt 2000/39**

(73) Patentinhaber: **LITEF GmbH**
**79115 Freiburg (DE)**

(72) Erfinder: **SPAHLINGER, Günter**
**D-70188 Stuttgart (DE)**

(74) Vertreter: **Müller, Frithjof E., Dipl.-Ing.**
**Müller Hoffmann & Partner**
**Patentanwälte**
**Innere Wiener Strasse 17**
**81667 München (DE)**

(56) Entgegenhaltungen:
**EP-A- 0 448 832       EP-A- 0 551 537**
**US-A- 5 123 741**

EP 1 038 155 B1

**Beschreibung**

Die Erfindung betrifft eine Anordnung und ein Verfahren zur Wellenlängenbestimmung durch ein verstimmtes, modulierbares Mach-Zehnder-Interferometer. das auf der Basis integrierter Optik auf einem anisotropen Substrat aufgebaut ist.

Optische Interferometer sind Geräte, bei denen ein Lichtstrahl in mindestens zwei Teillichtstrahlen aufgespalten wird, die - nachdem sie definierte Wege zurückgelegt haben - wieder zu einem Strahl vereinigt werden. Die Intensität des wiedervereinigten Gesamtlichtstrahls ist aufgrund von Interferenz abhängig von der Phasendifferenz der beiden Teillichtstrahlen.

Optische Interferometer werden z.B. zur Wellenlängenstabilisierung einer Lichtquelle, zur Wellenlängenmessung, zur Frequenzanalyse von Licht oder zur Demodulation frequenzmodulierter optischer Signale benutzt.

Ein verstimmtes Mach-Zehnder-Interferometer besitzt zwei Arme unterschiedlicher Länge und demnach unterschiedlicher Laufzeit (für das Licht), so daß die getrennten und dann wieder vereinigten Lichtstrahlen bei ihrem Zusammentreffen eine gegenseitige Phasenverschiebung aufweisen, die von der Laufzeitdifferenz und der Frequenz (bzw. Wellenlänge) des Lichts abhängt. Modulierbar heißt, daß die Laufzeit des Lichts in den beiden Armen (und damit die Laufzeitdifferenz) durch ein externes Signal (beispielsweise durch einen elektrooptischen Effekt mittels angebrachter Elektroden) gesteuert (oder moduliert) werden kann.

Es seien $\Delta L$ die Längendifferenz des verstimmten Interferometers, n der Brechungsindex im Wellenleiter des Interferometers, $\lambda$ die Lichtwellenlänge im Vakuum und $\varphi_m$ die Phase der zusätzlich aufgeprägten Modulation. Die Gesamtphase ergibt sich dann zu

$$\varphi = 2\,\pi\,\frac{n\Delta L}{\lambda} + \varphi_m \qquad\qquad (1)$$

Der Term

$$\varphi_g = 2\,\pi\,\frac{n\Delta L}{\lambda} \qquad\qquad (2)$$

wird im folgenden als Grundverstimmung des Interferometers bezeichnet. Die Leistung e des Lichts am Ausgang des Interferometers ergibt sich dann zu

$$e \sim 1 + \cos\left(2\,\pi\,\frac{n\Delta L}{\lambda} + \varphi_m\right) \qquad\qquad (3)$$

Diese Leistung wird durch einen Photodetektor (mit nachgeschaltetem Verstärker) in eine Detektorspannung $u_{det}$ umgewandelt, wobei zusätzlich noch der konstante Anteil 1 abgetrennt wird, bzw. unberücksichtigt bleibt, so daß

$$u_{det} \sim \cos\left(2\,\pi\,\frac{n\Delta L}{\lambda} + \varphi_m\right) \qquad\qquad (4)$$

gilt. Das ist die sogenannte Interferometerkennlinie, mit Umkehrpunkten, die dadurch definiert sind, daß das Argument der Cosinusfunktion (nämlich die Phase $\varphi$) ein ungerades, ganzzahliges Vielfaches von $\pi/2$ wird.

Verstimmte Mach-Zehnder-Interferometer sind in der Regel weitgehend temperaturkompensiert. Es bleibt jedoch ein restlicher Einfluß der Temperatur im Kompensationssignal übrig, der die Messung der Wellenlänge verfälscht.

Weiter weisen derartige auf der Basis integrierter Optik aufgebaute Bauelemente eine mehr oder weniger starke Gleichspannungsdrift auf. Daher wird zur Messung eine gleichspannungsfreie Modulationstechnik angewendet, bei der das Interferometer in die Umkehrpunkte seiner Kennlinie gesteuert wird, damit die beiden Lichtstrahlen periodisch in den Arbeitspunkt höchster Empfindlichkeit des Interferometers um Winkel von $(2n+1) \cdot \pi/2$ verschoben werden, wobei n eine ganze Zahl ist. Dazu wird über einen Phasenmodulator ein Signal $\varphi_m$ erzeugt, das eine Phasenverschiebung von beispielsweise $\varphi = \pm\pi/2, \pm3\pi/2, ...$, bewirkt.

Zusätzlich zu den zuvor beschriebenen Effekten wird die Messung der Wellenlänge durch wellenlängenabhängige Grundverstimmungen des Interferometers selbst verfälscht. Hier besteht das besondere Problem, daß diese Grundverstimmungen für jedes Interferometer individuell verschieden sind und sich über dessen Lebensdauer ändern können, weshalb sie nicht durch ein Kalibrierungsverfahren während der Fertigung abgeglichen und dann z.B. mittels einer Look-up Tabelle fehlerkompensiert werden können.

Der Erfindung liegt damit die Aufgabe zugrunde. eine Einrichtung und ein Verfahren zur Wellenlängenbestimmung von Licht mittels eines modulterbaren Mach-Zehnder-Interferometers anzugeben, bei dem die Grundverstimmung des Interferometers unter Berücksichtigung von Kompensationsverfahren ausgeglichen wird, um eine exakte Wellenlängenbestimmung zu ermöglichen.

Die erfindungsgemäße Einrichtung zur Wellenlängenbestimmung von Licht mit-tels eines modulierbaren Mach-Zehnder-Interferometers ist in Anspruch 1, angegeben.

Vorzugsweise wird der Integrator durch ein von einem Verstärker verstärktes und mit einem Demodulator durch ein Signal mit dem Vorzeichen der Steigung des jeweils angesteuerten Umkehrpunkts demoduliertes Detektorsignal gespeist.

Auf diese Weise ergibt sich bei der erfindungsgemäßen Meßeinrichtung eine geschlossene Regelschleife, durch die die durch die Modulation angesteuerten Punkte so lange verschoben werden, bis das Detektorsignal zu Null wird.

Das erfindungsgemäße Verfahren zur Wellenlängenbestimmung von Licht mit-tels eines modulierbaren Mach-Zehnder-Interferometers ist in Anspruch 11 angegeben.

Auf diese Weise wird die wellenlängenabhängige Grundverstimmung des Interferometers ausgeglichen und die Wellenlänge kann korrekt bestimmt werden. Andere vorteilhafte Ausgestaltungen des Erfindungsgedankens sind jeweils in den Unteransprüchen definiert.

Weitere Einzelheiten. Merkmale und Vorteile der Erfindung ergeben sich aus der nachfolgenden Beschreibung eines Ausführungsbeispiels anhand der Zeichnungen, es zeigen:

**Figur 1** eine erfindungsgemäße Einrichtung zur Wellenlängenbestimmung von Licht mittels eines verstimmten, modulierbaren Mach-Zehnder-Interferometers; und

**Figur 2** die Einrichtung gemäß Figur 1 mit zusätzlicher Temperaturkom-pensatlon.

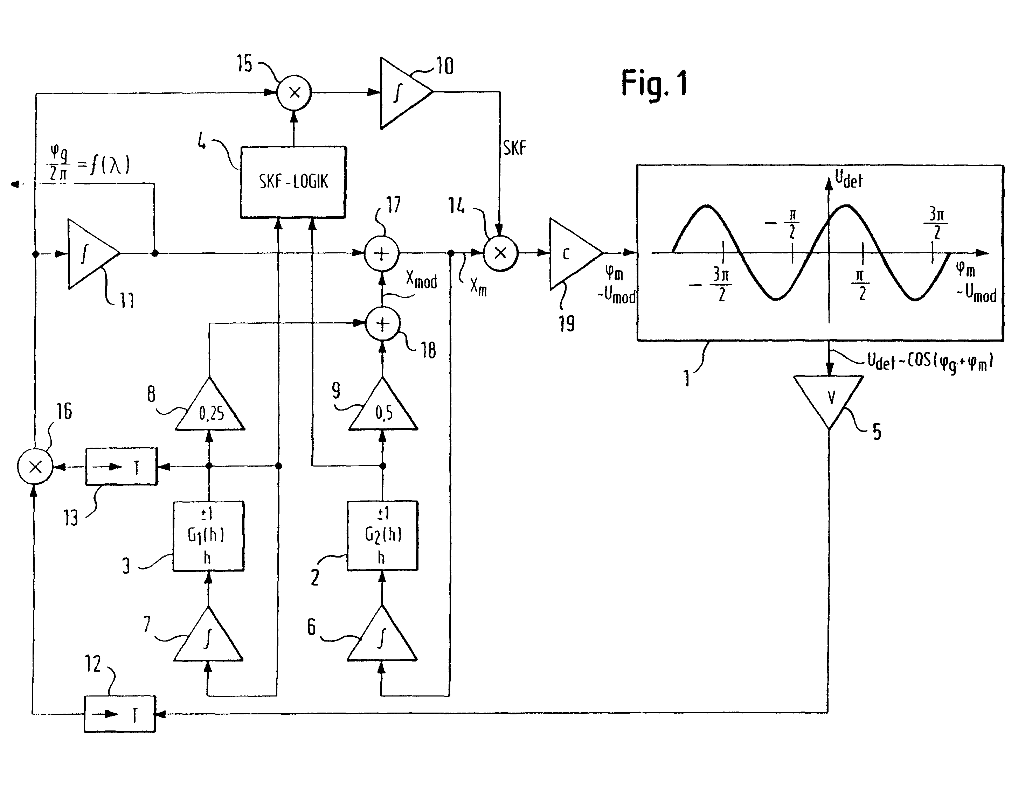

In Figur 1 ist das Mach-Zehnder-Interferometer 1 mit einer sinusförmigen Kennlinie abgebildet. Das Interferometer 1 ist mittels einer daran anzulegenden Modulationsspannung $u_{mod}$ modulierbar. Da verstimmte, modulierbare Mach-Zehnder-Interferometer auf der Basis integrierter Optik, auf die sich die Erfindung bezieht, eine mehr oder weniger starke Gleichspannungsdrift aufweisen, wird eine gleichspannungsfreie Modulationstechnik angewendet, bei der die Modulationsspannung $u_{mod}$ stets gleichspannungsfrei ist. Um das Interferometer in den Arbeitspunkt höchster Empfindlichkeit zu bringen, wird der eingekoppelte Lichtstrahl in zufälliger Folge oder Häufigkeit um einen Winkel von $\pm\pi/2$ oder $\pm3\pi/2$ verschoben, das heißt, daß das Interfenometer in die Wende- oder Umkehrpunkte seiner Kennlinie gesteuert wird.

Hierzu ist ein Modulator vorgesehen, der statistisch verteilte Ausgangswerte von $\pm 1/4$ oder $\pm 3/4$ liefert, die das Modulationssignal $x_{mod}$ bilden. Zur Erzeugung des Modulationssignals $x_{mod}$ ist ein erster Zufallszahlengenerator 3 vorgesehen, der statistisch verteilte Ausgangswerte von $\pm1$ erzeugt, die von einer ersten Bewertungseinheit 8 mit einem Faktor von 0,25 bewertet werden. Weiter ist ein zweiter Zufallszahlengenerator 2 vorhanden, der ebenfalls statistisch verteilte Ausgangswerte von $\pm1$ erzeugt, die jedoch von einer zweiten Bewertungeinheit 9 mit einem Wert von 0.5 bewertet werden. Diese so gewichteten Werte der beiden Zufallszahlengeneratoren werden von einem Addierer 18 addiert und bilden das Modulationssignal $x_{mod}$. In diesem Modulationssignal wird das Rücksetzsignal des Integrierers 11 addiert, wobei das zusammengesetzte Modulationssignal $x_m$ entsteht. Dieses zusammengesetzte Modulationssignal durchläuft zur Erzeugung der Modulationsphase $\varphi_{mod}$ einen Skalenfaktormultiplizierer 14, der mit dem Skalenfaktor SKF multipliziert, und ein Verstärkungsglied 19 mit dem Verstärkungsfaktor c. In letzterem sind die Verstärkungsfaktoren eines Digital-Analogwandlers, eines nachgeschalteten Verstärkers und die elektro-optische Umsetzungskonstante des Phasenmodulators zusammengefaßt. Der Skalenfaktormultiplizierer multipliziert im Idealfall mit einem Faktor SKF = $2\pi/c$, so daß ein zusammengesetztes Modulationssignal $x_m = 1$ in eine Modulationsphase $\varphi_m = 2\pi$ umgesetzt wird, da $\varphi_m = x_m \cdot SKF \cdot c$.

Damit das zusammengesetzte Modulationssignal $x_m$ stets gleichspannungsfrei ist, wird es an einen Integrator 6 angelegt, dessen Ausgangssignal die statistische Häufigkeit für das Auftreten von +1 bzw. -1 am Ausgang des zweiten Zufallszahlengenerators 2 über dessen Eingang h steuert.

Die vom Interferometer 1 erzeugte modulierte Detektorspannung $u_{det}$ beaufschlagt einen Verstärker 5 mit dem Verstärkungsfaktor V. Das Ausgangssignal des Verstärkers 5 läuft durch ein Verzögerungsglied 12, das um eine Zeit T verzögert und als Laufzeitausgleich dient, und gelangt an einen Demodulator 16, der es durch ein Signal mit dem Vorzeichen der Steigung des jeweils angesteuerten Umkehrpunkts demoduliert. Das Demodulationssignal ergibt sich aus dem Ausgangssignal des ersten Zufallsgenerators 3, das zum Laufzeitausgleich durch ein Verzögerungsglied 13 mit der Verzögerungszeit T gelaufen ist. Um ein gleichspannungsfreies Demodulationssignal zu erhalten, wird das Ausgangssignal des Zufallszahlengenerators 3 an einen Integrator 7 geführt, der die statistische Häufigkeit für das Auftreten von + 1 bzw. - 1 am Ausgang des ersten Zufallszahlengenerators 3 über dessen Eingang h steuert. Die Verzögerungszeit T soll Signallaufzelten, verursacht durch die Verarbeitungszeit der digitalen Signalverarbeitung und eines Digital-Analogwandlers, ausgleichen.

Die demodulierte Detektorspannung $u_{det}$ wird an einen Integrator 11 geführt, der die wellenlängenabhängige Grundverstimmung $\varphi_g$ des Interferometers durch Aufintegration der demodulierten Detektorspannung $u_{det}$ rücksetzt (bzw. kompenstert). Diese wellenlängenabhängige Grundverstimmung $\varphi_g$ kann durch

$$\lambda = 2\,\pi\,\frac{n\Delta L}{\varphi_g} \qquad\qquad (5)$$

in die Wellenlänge $\lambda$ umgerechnet werden und wird als Meßsignal $f(\lambda) = \varphi_g/2\pi$ ausgegeben. Gleichzeitig wird das Meßsignal mittels eines Addierers 17 dem vom Modulator erzeugten Modulationssignal $x_{mod}$ überlagert und so ein zusammengesetztes dem Interferometer 1 zugeführtes Modulationssignal $x_m$ erzeugt. Durch diese Überlagerung werden die durch die Modulation angesteuerten Punkte solange verschoben, bis die Detektorspannung $u_{det}$ zu Null wird.

Eine Hilfsregelschaltung für den Skalenfaktor besteht aus einem Skalenfaktordemodulator 15, der die demodulierte Detektorspannung $u_{det}$ mittels eines Signals demoduliert, das von einer speziellen, von dem ersten Zufallszahlengenerator 3 und dem zweiten Zufallszahlengenerator 2 gesteuerten Logik 4 erzeugt wird. Die auf diese Weise bewertete Detektorspannung $u_{det}$ wird an einen Integrator 10 geführt, dessen Ausgangssignal einen Skalenfaktor SKF darstellt, der den korrekte Skalenfaktor am Skalenfaktormultiplizierer 14 einstellt.

Eine Abweichung des Skalenfaktors vom Idealwert $2\pi/c$ hat ein typisches, von den Signalen der beiden Zufallszahlengeneratoren 2 und 3 abhängiges Fehlersignal (oder Signalmuster) im demodulierten Detektorsignal zur Folge, verursacht dadurch, daß nun nicht mehr exakt die Umkehrpunkte der Interferometerkennlinie angesteuert werden. Dieses typische Signalmuster wird in der Logik 4 synthetisiert, und mit diesem synthetisierten Signalmuster wird das verstärkte Eingangssignal in einem zweiten Demodulator 15 demoduliert. Falls eine Abweichung vom Idealwert des Skalenfaktors tatsächlich existiert, erfolgt im Integrator 10 eine Aufintegration des Fehlersignals solange, bis sich als Ausgangswert der korrekte Wert für den Skalenfaktor ergibt.

Das Signal $f(\lambda)$, welches die wellenlängenabhängige Grundverstimmung rücksetzt (bzw. kompensiert), wird ebenfalls mit dem Skalenfaktor SKF multipliziert, damit es von dem Verstärkungsfaktor c unabhängig wird, da es ebenfalls das Verstärkungsglied 19 mit dem Verstärkungsfaktor c durchläuft. Es ergibt sich also die am Interferometer 1 anliegende Modulationsphase $\varphi_m = \varphi_{mod} + f(\lambda) \cdot SKF \cdot c = (x_{mod} + f(\lambda)) \cdot SKF \cdot c = x_m \cdot SKF \cdot c$. Daraus folgt, daß auch ein zusammengesetztes Modulationssignal von $x_m = 1$ einer Modulationsphase von $\varphi_m = 2\pi$ entspricht.

Das in der Figur gezeigte verstimmte Mach-Zehnder-Interferometer ist im wesentlichen temperaturkompensiert, ein restlicher Einfluß der Temperatur $\vartheta$ bleibt jedoch im Kompensationssignal übrig und verfälscht die Messung der Wellenlänge.

Der geregelte Skalenfaktorwert SKF dagegen ist direkt von den Materialkonstanten ($n(\vartheta)$, $\Delta L(\vartheta)$) beispielsweise von Lithiumniobat abhängig, auf dem das Mach-Zehnder-Interferometer aufgebaut ist, und repräsentiert überwiegend die Temepratur des Chips mit geringen Verfälschungen durch die Wellenlänge.

Durch die Verknüpfung der beiden Signale (Kompensationssignal, $2\pi$-Signal) kann über den Skalenfaktormultiplizierer 14 eine sehr effektive Kompensation restlicher Temperatureinflüsse erzielt werden.

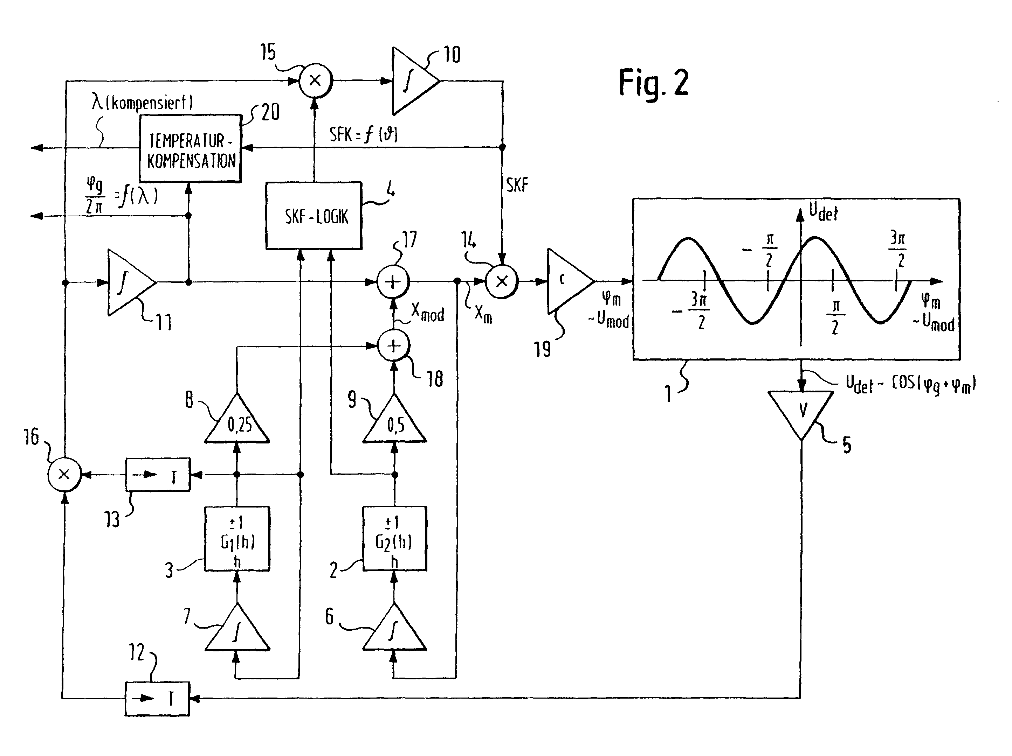

Eine hierfür geeignete Schaltung ist in der Figur 2 gezeigt. Zusätzlich zu der erfindungsgemäßen Einrichtung zur Wellenlängenbestimmung, die in der Figur 1 dargestellt ist, ist hier ein Temperaturkompensator (20) vorhanden, der sowohl das Ausgangssignal $f(\lambda) = \varphi_g/2\pi$ des Integrators 11, als auch den temperaturabhängigen Skalenfaktor SKF $= f(\vartheta)$ empfängt. Abhängig von diesen Signalen gibt der Temperaturkompensator 20 eine kompensierte Wellenlänge $\lambda$ aus.

Die Temperaturkompensation wird entsprechend des folgenden Ansatzes erreicht:
Über den Skalenfaktor SKF wird erreicht, daß Werten von $x_m = 1$ Phasenwerte von $\varphi_m = 2\pi$ entsprechen. Dieser Skalenfaktor stellt sich automatisch ein, und erreicht, um die obige Bedingung zu erfüllen, den Wert SKF $= 2\pi/c$. In c sind zusammengefaßt die Wandlungskonstante eines Digital-Analog-Wandlers, die als konstant angenommen werden kann, und der elektro-optische Koppelfaktor des Phasenmodulators. Letzterer ist, besonders bei Wandlern in integriertoptischer Technik, in relativ starkem Maß von der Chiptemperatur $\vartheta$ abhängig. Somit ist auch $c = c(\vartheta)$ eine Funktion der Chiptemperatur, so daß auch der Skalenfaktor SKF $= 2\pi/c(\vartheta) = f(\vartheta)$ eine Funktion der Chiptemperatur ist. Daraus folgt, daß aus dem Skalenfaktor auf die Chiptemperatur geschlossen werden kann. Damit kann über diese Temperatur eine Resttemperaturabhängigkeit der Meßgröße

$$\varphi_g\,(\lambda,\,\vartheta) = 2\pi\,\frac{n(\vartheta)\Delta L(\vartheta)}{\lambda} \qquad\qquad (6)$$

kompensiert werden.

Das geschieht dadurch, daß der Temperaturkompensator 20 die schwach temperaturabhängige Meßgröße $\varphi_g$ /2$\pi$ durch den stark temperaturabhängigen Skalenfaktor SKF temperaturkompensiert wird. so daß der Temperaturkompensator 20 hieraus die von Temperatureinflüssen befreite Meßgröße $\lambda$ bestimmen kann.

Der zuvor beschriebene Aufbau der erfindungsgemäßen Wellenlängenmeßeinrichtung kann in verschiedener Hinsicht abgewandelt sein. Es ist insbesondere möglich, zur Steuerung des Interferometers in die Umkehrpunkte seiner Kennlinie einen unterschiedlich realisierten Modulator einzusetzen, oder den hier vorgesehenen Modulator auch für andere Interferometer zu nutzen, bei denen keine oder eine andere Kompensationsschaltung eingesetzt ist.

**Patentansprüche**

1. Einrichtung zur Wellenlängenbestimmung von Licht mittels eines modulierbaren Mach-Zehnder-Interferometers (1), mit:

   einem Modulator (2, 3, 8, 9, 18) zur Modulation des Interferometers (1), der das Interferometer (1) mittels eines Modulationssignals ($x_{mod}$) in die Umkehrpunkte seiner Kennlinie steuert, **gekennzeichnet durch** einen Integrator (11), der die wellenlängenabhängige Grundverstimmung des Interferometers (1) rücksetzt und das Rücksetzsignal als Meßgröße ($f(\lambda)$) ausgibt, einen Addierer (17), der das vom Integrator (11) erzeugte Signal ($f(\lambda)$) zur Rücksetzung der wellenlängenabhängigen Grundverstimmung dem vom Modulator (2, 3, 8, 9, 18) erzeugten Modulationssignal ($x_{mod}$) überlagert; und eine Integrationseinrichtung (6, 7), die einen Mittelwert dieses zusammengesetzten und dem Interferometer zugeführten Modulationssignals ($x_m$) integriert und **durch** eine Steuerung der Häufigkeit der angesteuerten Umkehrpunkte diesen Mittelwert immer auf dem Wert Null hält.

2. Einrichtung nach Anspruch 1, **dadurch gekennzeichnet, daß** der Integrator (11) durch ein von einem Verstärker (5) verstärktes Detektorsignal ($u_{det}$) gespeist wird, das mittels eines Demodulators (16) mit Hilfe eines Signals mit dem Vorzeichen der Steigung des jeweils angesteuerten Umkehrpunktes demoduliert ist.

3. Einrichtung nach Anspruch 1 oder 2, **dadurch gekennzeichnet, daß** der Modulator (2, 3, 8, 9, 18) folgende Baugruppen enthält:

   einen ersten Zufallszahlengenerator (3), der statistisch verteilte Ausgangswerte von $\pm 1$ erzeugt; einen zweiten Zufallszahlengenerator (2), der statistisch verteilte Ausgangswerte von $\pm 1$ erzeugt; eine erste Bewertungseinheit (8), die einen vom ersten Zufallszahlengenerator erzeugten Wert mit 0,25 bewertet; eine zweite Bewertungseinheit (9), die einen vom zweiten Zufallszahlengenerator erzeugten Wert mit 0,5 bewertet: und einen Addierer (18) zur Erzeugung des Modulationssignals ($x_{mod}$), der die von den Zufallszahlengeneratoren erzeugten und bewerteten Werte addiert.

4. Einrichtung nach den Ansprüchen 2 und 3, **dadurch gekennzeichnet, daß** der Demodulator (16) das durch ein Verzögerungsglied (12) gelaufene zu demodulierende Detektorsignal ($u_{det}$) empfängt und mit dem durch ein Verzögerungsglied (13) gelaufenen Ausgangssignal des ersten Zufallszahlengenerators (3) mit dem Vorzeichen der Steigung des jeweils angesteuerten Umkehrpunktes demoduliert.

5. Einrichtung nach einem der vorstehenden Ansprüche, **dadurch gekennzeichnet, daß** die Integrationseinrichtung (6, 7) einen Integrator (6) enthält, der das Modulationssignal ($x_{mod}$) empfängt und dessen Ausgangssignal die statistische Näufigkeit für das Auftreten von +1 bzw. -1 am Ausgang des in dem Modulator (2, 3, 8, 9, 18) enthaltenen zweiten Zufallszahlengenerators (2) steuert.

6. Einrichtung nach einem der vorstehenden Ansprüche, **dadurch gekennzeichnet, daß** die Integrationseinrichtung (6, 7) einen Integrator (7) enthält. der das Ausgangssignal des ersten Zufallszahlengenerators (3) empfängt und dessen Ausgangssignal die statistische Häufigkeit für das Auftreten von +1 bzw. -1 am Ausgang des in dem Modulator (2, 3, 8, 9, 18) enthaltenen ersten Zufallszahlengenerators (3) steuert.

7. Einrichtung nach einem der vorstehenden Ansprüche, **dadurch gekennzeichnet, daß** das zusammengesetzte

Modulationssignal ($x_m$) zur Erzeugung einer Modulationsphase ($\varphi_m$) von einem Skalenfaktormultiplizierer (14) mit einem Skalenfaktor (SKF) multipliziert und durch ein Verstärkungsglied (19) mit einem bestimmten Faktor (c) verstärkt wird, um ein zusammengesetztes Modulationssignal ($x_m$) der Größe 1 in eine Modulationsphase ($\varphi_m$) der Größe $2\pi$ umzusetzen.

**8.** Einrichtung nach Anspruch 7, **dadurch gekennzeichnet, daß** der Skalenfaktormultiplizierer (14) von einer Hilfsregelschaltung angesteuert ist, die einen Skalenfaktordemodulator (15) enthält, der ein von einem Verstärker (5) verstärktes und mittels eines Demodulators (16) mit Hilfe des Ausgangssignals des ersten Zufallszahlengenerators (3) demoduliertes Detektorsignal ($u_{det}$) gespeist wird, und der sein Demodulationssignal von einer von dem ersten und dem zweiten Zufallszahlengenerator (3, 2) gesteuerten Logikschaltung (4) erhält und einen Integrator (10) speist, der den korrekten Skalenfaktor (SKF) am Skalenfaktormultiplizierer (14) einstellt.

**9.** Einrichtung nach einem der Ansprüche 7 oder 8, **dadurch gekennzeichnet, daß** aus dem am Skalenfaktormultiplizierer (14) anliegenden Skalenfaktor (SKF) ein Temperaturkompensationssignal abgeleitet wird, mit dem eine restliche Temperaturabhängigkeit des Rücksetzsignals kompensiert werden kann.

**10.** Einrichtung nach einem der vorstehenden Ansprüche, **dadurch gekennzeichnet, daß** das Mach-Zehnder-Interferometer in einem integrierten Optik-Chip enthalten ist.

**11.** Verfahren zur Wellenlängenbestimmung von Licht mittels eines modulierbaren Mach-Zehnder-Interferometers, bei dem

das Interferometer durch ein Modulationssignal ($x_{mod}$) in die Umkehrpunkte seiner Kennlinie gesteuert wird;
**dadurch gekennzeichnet, daß**

eine wellenlängenabhängige Grundverstimmung des Interferometers rückgesetzt wird, indem ein verstärktes und mit dem Vorzeichen der Steigung des jeweils angesteuerten Umkehrpunktes demoduliertes Detektorsignal ($u_{det}$) aufintegriert wird, welches dem Modulationssignal ($x_{mod}$) überlagert wird, wobei ein Mittelwert dieses zusammengesetzten und dem Interferometer zugeführten Modulationssignals ($x_m$) integriert und durch eine Steuerung der Häufigkeit der angesteuerten Umkehrpunkte immer auf dem Wert Null gehalten wird; und

das so erzeugte Rückstellsignal für die wellenlängenabhängige Grundverstimmung des Interferometers als Meßgröße ($f(\lambda)$) ausgegeben wird.

**12.** Verfahren nach Anspruch 11, **dadurch gekennzeichnet, daß** das Modulationssignal ($x_{mod}$) erzeugt wird, indem

statistisch verteilte erste Ausgangswerte von $\pm1$ erzeugt und mit 0,25 bewertet werden;
statistisch verteilte zweite Ausgangswerte von $\pm1$ erzeugt und mit 0,5 bewertet werden: und
die erzeugten und bewerteten Werte zur Erzeugung des Modulationssignals ($x_{mod}$) addiert werden.

**13.** Verfahren nach Anspruch 12, **dadurch gekennzeichnet, daß** das Modulationssignal ($x_{mod}$) mittels einer Steuerung der statistische Häufigkeit für das Auftreten von +1 bzw. -1 als zweiten Ausgangswert abhängig von dem Modulationssignal ($x_{mod}$) mittelwertfrei gehalten wird.

**14.** Verfahren nach einem der Ansprüche 12 oder 13, **dadurch gekennzeichnet, daß** der erste Ausgangswert als Demodulationssignal für das Detektorsignal ($u_{det}$) herangezogen wird und mittels einer Steuerung der statistische Häufigkeit für das Auftreten von +1 bzw. -1 abhängig von dem ersten Ausgangswert mittelwertfrei gehalten wird.

**15.** Verfahren nach einem der Ansprüche 11 bis 14, **dadurch gekennzeichnet, daß** das zusammengesetzte Modulationssignal ($x_m$) zur Erzeugung einer Modulationsphase ($\varphi_m$) so mit einem Skalenfaktor (SKF) multipliziert und mit einem bestimmten Faktor (c) verstärkt wird, daß ein zusammengesetztes Modulationssignal ($x_m$) der Größe 1 in eine Modulationsphase ($\varphi_m$) von $2\pi$ umgesetzt wird.

**16.** Verfahren nach Anspruch 15, **dadurch gekennzeichnet, daß** sich der Skalenfaktor (SKF) aus einem verstärkten und durch ein Signal mit dem Vorzeichen der Steigung des jeweils angesteuerten Umkehrpunktes demodulierten Detektorsignal ($u_{det}$) ergibt, das von einem von den ersten und zweiten Ausgangswerten abhängigen Signal demoduliert und anschließend aufintegriert wird.

**17.** Verfahren nach einem der Ansprüche 11 bis 16, **dadurch gekennzeichnet, daß** das verstärkte Detektorsignal ($u_{det}$) zunächst durch einen Laufzeitausgleich (T) korrigiert wird und mit dem Signal mit dem Vorzeichen der Steigung des jeweils angesteuerten Umkehrpunktes demoduliert wird, das ebenfalls durch einen Laufzeitausgleich (T) korrigiert ist.

**18.** Verfahren nach einem der Ansprüche 11 bis 17, **dadurch gekennzeichnet, daß** aus dem Skalenfaktor (SKF) ein Temperaturkompensationssignal abgeleitet wird, mit dem eine restliche Temperaturabhängigkeit des Rücksetzsignals kompensiert werden kann.

## Claims

**1.** Device for determining the wavelength of light by means of a modulable Mach-Zehnder interferometer (1), having:

a modulator (2, 3, 8, 9, 18) for the modulation of the interferometer (1) which modulator brings the interferometer (1), by means of a modulation signal ($X_{mod}$), to the points of inversion of its characteristic, **characterized by** an integrator (11), which resets, and outputs as measured variable ($f(\lambda)$), the wavelength-dependent basic detuning of the interferometer (1),
an adder (17), which superposes the signal ($f(X)$) generated by the integrator (11) for the erasure of the wavelength-dependent basic detuning upon the modulation signal ($X_{mod}$) generated by the modulator (2, 3, 8, 9, 18); and
an integrating device (6, 7), which integrates a mean value of this composed modulation signal ($X_m$) fed to the interferometer and, by controlling the frequency of the driven points of inversion, always keep this mean value at the value zero.

**2.** Device according to claim 1, **characterized in**
**that** the integrator (11) is fed by a detector signal ($u_{det}$) which is amplified by an amplifier (5) and which is demodulated by means of a demodulator (16) with the aid of a signal having the sign of the gradient of the respectively driven point of inversion.

**3.** Device according to claim 1 or 2, **characterized in**
**that** the modulator (2, 3, 8, 9, 18) includes the following assemblies:

a first random number generator (3) which generates statistically distributed output values of $\pm 1$;
a second random number generator (2) which generates statistically distributed output values of $\pm 1$;
a first weighting unit (8) which weights a value generated by the first random number generator with 0.25;
a second weighting unit (9) which weights a value generated by the second random number generator with 0.5; and
an adder (18) to generate the modulation signal ($x_{mod}$), which adder adds the values which have been generated by the random number generators and weighted.

**4.** Device according to claims 2 and 3, **characterized in**
**that** the demodulator (16) receives the detector signal ($u_{det}$) which has passed through a delay element (12) and which demodulates that signal with the output signal, which has passed through a delay element (13), of the first random number generator (3), having the sign of the gradient of the respectively driven point of inversion.

**5.** Device according to anyone of the preceding claims, **characterized in**
**that** the integrating device (6, 7) includes an integrator (6) which receives the modulation signal ($X_{mod}$) and the output signal of which controls the statistical frequency for the occurence of +1 and -1 respectively at the output of the second random number generator (2) included in the modulator (2, 3, 8, 9, 18).

**6.** Device according to anyone of the preceding claims, **characterized in**
**that** the integrating device (6, 7) includes an integrator (7) which receives the output signal of the first random number generator (3) and the output signal of which controls the statistical frequency for the occurence of +1 and -1 respectively at the output of the first random number generator (3) included in the modulator (2, 3, 8, 9, 18).

**7.** Device according to anyone of the preceding claims, **characterized in**
**that** to generate a modulation phase ($\varphi m$), the composed modulation signal ($x_m$) is multiplied by a scale factor (SKF) by means of a scale factor multiplier (14) and is amplified by a specified factor (c) by means of an amplifying element (19), in order to convert a composed modulation signal ($x_m$) of magnitude 1 into a modulation phase ($\varphi m$) of magnitude $2\pi$.

**8.** Device according to claim 7, **characterized in**

**that** the scale factor multiplier (14) is driven by an auxiliary control circuit which includes a scale factor demodulator (15) which is fed by a detector signal ($u_{det}$) which is amplified by an amplifier (5) and which is demodulated by means of a demodulator (16) with the aid of the output signal of the first random number generator (3), and which receives its demodulation signal from a logic circuit (4) controlled by the first and the second random number generator (3, 2) and which feeds an integrator (10) which sets the correct scale factor (SKF,) at the scale factor multiplier (14).

9. Device according to anyone of claims 7 or 8, **characterized in**
   **that** there is derived from the scale factor (SKF) present at the scale factor multiplier (14) a temperature compensation signal by which a residual temperature dependence of the reset signal can be compensated.

10. Device according to anyone of the preceding claims, wherein the Mach-Zehnder interferometer Is included in an integrated optical chip.

11. Method for determining the wavelength of light by means of a modulable Mach-Zehnder interferometer, in which the interferometer is brought by a modulation signal ($x_{mod}$) to the points of inversion of its characteristic;
    **characterized in that**
    a wavelength-dependent basic detuning of the interferometer is reset **in that** a detector signal ($u_{det}$) which is amplified and demodulated with the sign of the gradient of the respectively driven point of inversion is integrated, and superposed upon the modulation signal ($x_{mod}$), and a mean value of this composed modulation signal ($x_{m}$) fed to the interferometer is integrated and, by controlling the frequency of the driven points of inversion, is always kept at the value zero; and
    the thus generated reset signal for the wavelength-dependent basic detuning of the interferometer is output as measured variable ($f(\lambda)$).

12. Method according to claim 11, **characterized in that**
    the modulation signal ($x_{mod}$) is generated **in that**
    statistically distributed first output values of $\pm1$ are generated and weighted with 0.25;
    statistically distributed second output values of $\pm1$ are generated and weighted with 0.5; and
    the generated and weighted values are added to generate the modulation signal ($x_{mod}$).

13. Method according to claim 12, **characterized in**
    **that** the modulation signal ($x_{mod}$) is kept averageless by means of a control of the statistical frequency for the occurence of +1 and -1 respectively as a second output value, in dependence upon the modulation signal ($x_{mod}$).

14. Method according to anyone of claims 12 or 13, **characterized in**
    **that** the first output value is utilized as the demodulation signal for the detector signal ($u_{det}$) and is kept averageless by means of a control of the statistical frequency for the occurence of +1 and -1 respectively, in dependence upon the first output value.

15. Method according to anyone of claims 11 to 14, **characterized in**
    **that** to generate a modulation phase ($\varphi m$), the composed modulation signal ($x_{m}$) is multiplied by a scale factor (SKF) and amplified by a specified factor (c) so that a composed modulation signal ($x_{m}$) of magnitude 1 is converted into a modulation phase ($\varphi m$) of $2\pi$.

16. Method according to claim 15, **characterized in**
    **that** the scale factor (SKF) is obtained from an amplified detector signal ($U_{det}$) which is demodulated by a signal having the sign of the gradient of the respectively driven point of inversion and which is demodulated by a signal dependent upon the first and second output values and is subsequently integrated.

17. Method according to anyone of claims 11 to 16, **characterized in**
    **that** the amplified detector signal ($u_{det}$) is in the first instance corrected by a transit time equalization (T) and is demodulated by the signal having the sign of the gradient of the respectively driven point of inversion, which signal has likewise been corrected by a transit time equalization (T).

18. Method according to anyone of claims 11 to 17, **characterized in**
    **that** there is derived from the scale factor (SKF) a temperature compensation signal by which a residual temperature dependence of the reset signal can be compensated.

**Revendications**

1.  Dispositif pour déterminer la longueur d'onde de lumière au moyen d'un interféromètre de Mach-Zehnder (1) modulable, comportant :

    un modulateur (2, 3, 8, 9, 18) pour la modulation de l'interféromètre (1), qui commande l'interféromètre (1) au moyen d'un signal de modulation ($X_{mod}$) aux points d'inversion de sa courbe caractéristique, **caractérisé par**

    un intégrateur (11) qui réinitialise le déphasage de base, dépendant de la longueur d'onde, de l'interféromètre (1), et délivre le signal de réinitialisation en tant que grandeur de mesure ($f(\lambda)$),

    un additionneur (17) qui superpose le signal ($f(\lambda)$) produit par l'intégrateur (11) pour la réinitialisation du déphasage de base dépendant de la longueur d'onde au signal de modulation ($X_{mod}$) produit par le modulateur (2, 3, 8, 9, 18) ; et

    un dispositif d'intégration (6, 7) qui intègre une valeur moyenne de ce signal de modulation ($X_m$) composé et envoyé à l'interféromètre, et qui, par une commande de la fréquence des points d'inversion commandés, maintient toujours cette valeur moyenne à la valeur zéro.

2.  Dispositif selon la revendication 1, **caractérisé en ce que** l'intégrateur (11) est alimenté par un signal de détection ($U_{det}$) amplifié par un amplificateur (5), lequel signal est démodulé au moyen d'un démodulateur (16) à l'aide d'un signal présentant le signe de la pente du point d'inversion commandé dans chaque cas.

3.  Dispositif selon la revendication 1 ou 2, **caractérisé en ce que** le modulateur (2, 3, 8, 9, 18) contient les ensembles suivants :

    un premier générateur de nombres aléatoires (3) qui produit des valeurs de sortie distribuées statistiquement de $\pm$ 1 ;

    un deuxième générateur de nombres aléatoires (2) qui produit des valeurs de sortie distribuées statistiquement de $\pm$ 1 ;

    une première unité d'évaluation (8) qui attribue une valeur de 0,25 à une valeur produite par le premier générateur de nombres aléatoires ;

    une deuxième unité d'évaluation (9) qui attribue une valeur de 0,5 à une valeur produite par le deuxième générateur de nombres aléatoires ; et

    un additionneur (18) pour produire le signal de modulation ($X_{mod}$) qui additionne les valeurs produites par les générateurs de nombres aléatoires et évaluées.

4.  Dispositif selon les revendications 2 et 3, **caractérisé en ce que** le démodulateur (16) reçoit le signal de détection ($U_{det}$) à démoduler et qui a traversé un organe de temporisation (12), et le démodule avec le signal de sortie, qui a traversé un organe de temporisation (13), du premier générateur de nombres aléatoires (3) avec le signe de la pente du point d'inversion commandé dans chaque cas.

5.  Dispositif selon l'une des revendications précédentes, **caractérisé en ce que** le dispositif d'intégration (6, 7) contient un intégrateur (6) qui reçoit le signal de modulation ($X_{mod}$) et dont le signal de sortie commande la fréquence statistique pour l'apparition de + 1 ou - 1 à la sortie du deuxième générateur de nombres aléatoires contenu dans le modulateur (2, 3, 8, 9, 18).

6.  Dispositif selon l'une des revendications précédentes, **caractérisé en ce que** le dispositif d'intégration (6, 7) contient un intégrateur (7) qui reçoit le signal de sortie du premier générateur de nombres aléatoires (3) et dont le signal de sortie commande la fréquence statistique pour l'apparitio de + 1 ou - 1 à la sortie du premier générateur de nombres aléatoires contenu dans le modulateur (2, 3, 8, 9, 18).

7.  Dispositif selon l'une des revendications précédentes, **caractérisé en ce que** pour produire une phase de modulation ($\varphi_m$), le signal de modulation ($X_m$) composé est multiplié par un facteur de cadrage (SKF), au moyen d'un multiplicateur à facteur de cadrage (14), et est amplifié d'un facteur (c) déterminé au moyen d'un organe d'amplification (19), afin de transformer un signal de modulation ($X_m$) composé de grandeur 1 en une phase de modulation ($\varphi_m$) de grandeur $2\pi$.

8. Dispositif selon la revendication 7, **caractérisé en ce que** le multiplicateur à facteur de cadrage (14) est commandé par un circuit de régulation auxiliaire qui contient un modulateur à facteur de cadrage (15), et qui reçoit un signal de détection ($U_{det}$) amplifié par un amplificateur (5) et démodulé au moyen d'un démodulateur (16) à l'aide du signal de sortie du premier générateur de nombres aléatoires (3), et qui reçoit son signal de démodulation d'un circuit logique (4) commandé par le premier et le deuxième générateur de nombres aléatoires (3, 2) et alimente un intégrateur (10) qui règle le facteur de cadrage (SKF) correct dans le multiplicateur à facteur de cadrage (14).

9. Dispositif selon l'une des revendications 7 ou 8, **caractérisé en ce que** du facteur de cadrage (SKF) qui s'applique au multiplicateur à facteur de cadrage (14), dérive un signal de compensation de la température au moyen duquel on peut compenser une dépendance résiduelle du signal de réinitialisation vis à vis de la température.

10. Dispositif selon l'une des revendications précédentes, **caractérisé en ce que** l'interféromètre de Mach-Zehnder est contenu dans une puce optique intégrée.

11. Procédé pour déterminer la longueur d'onde de lumière au moyen d'un interféromètre de Mach-Zehnder modulable, dans lequel
l'interféromètre est commandé par un signal de modulation ($X_{mod}$) aux points d'inversion de sa courbe caractéristique ;
**caractérisé en ce que**
un déphasage de base dépendant de la longueur d'onde de l'interféromètre est réinitialisé par le fait qu'un signal de détecteur ($U_{det}$) amplifié et démodulé avec le signe de la pente du point d'inversion commandé dans chaque cas, est intégré, et superposé au signal de modulation ($X_{mod}$), une valeur moyenne de ce signal de modulation ($X_m$) composé et envoyé à l'interféromètre étant intégrée et maintenue toujours à la valeur zéro par une commande de la fréquence des points d'inversion commandés ; et
le signal de réinitialisation ainsi produit est délivré en tant que grandeur de mesure ($f(\lambda)$) pour le déphasage de base dépendant de la longueur d'onde de l'interféromètre.

12. Procédé selon la revendication 11, **caractérisé en ce que** le signal de modulation ($X_{mod}$) est produit **en ce que**
des premières valeurs de sortie distribuées statistiquement de $\pm 1$ sont produites et évaluées à 0,25 ;
des deuxièmes valeurs de sortie distribuées statistiquement de $\pm 1$ sont produites et évaluées à 0,5 ; et
les valeurs produites et évaluées sont additionnées pour produire le signal de modulation ($X_{mod}$).

13. Procédé selon la revendication 12, **caractérisé en ce que** le signal de modulation ($X_{mod}$) est maintenu sans moyenne au moyen d'une commande de la fréquence statistique pour l'apparitio de + 1 ou - 1 en tant que deuxième valeur de sortie, en fonction du signal de modulation ($X_{mod}$).

14. Procédé selon l'une des revendications 12 ou 13, **caractérisé en ce que** la première valeur de sortie est utilisée comme signal de démodulation pour le signal de détection ($U_{det}$) et est maintenue sans moyenne au moyen d'une commande de la fréquence statistique pour l'apparition de + 1 ou - 1, en fonction de la première valeur de sortie.

15. Procédé selon l'une des revendications 11 à 14, **caractérisé en ce que** le signal de modulation ($X_m$) composé est multiplié par un facteur de cadrage (SKF), pour produire une phase de modulation ($\varphi_m$), et est amplifié d'un facteur (c) déterminé, de manière qu'un signal de modulation ($X_m$) composé de grandeur 1 soit transformé en une phase de modulation ($\varphi_m$) de $2\pi$.

16. Procédé selon la revendication 15, **caractérisé en ce que** le facteur de cadrage (SKF) résulte d'un signal de détection ($U_{det}$) amplifié et démodulé par un signal avec le signe de la pente du point d'inversion commandé dans chaque cas, lequel signal de détection est démodulé par un signal dépendant des premières et des deuxièmes valeurs de sortie et est ensuite intégré.

17. Procédé selon l'une des revendications 11 à 16, **caractérisé en ce que** le signal de détection ($U_{det}$) amplifié est d'abord corrigé par une compensation de durée (T) et est démodulé avec le signal présentant le signe de la pente du point d'inversion commandé dans chaque cas, lequel est également corrigé par une compensation de durée (T).

**18.** Procédé selon l'une des revendications 11 à 17, **caractérisé en ce qu'**à partir du facteur de cadrage (SKF) on délivre un signal de compensation de la température au moyen duquel on peut compenser une dépendance résiduelle du signal de réinitialisation vis à vis de la température.

Fig. 1

Fig. 2